# EUROPÄISCHE PATENTSCHRIFT

(11) **EP 0 544 733 B1**
(45) Veröffentlichungstag und Bekanntmachung des Hinweises auf die Patenterteilung: **15.06.1994**
(21) Anmeldenummer: 91914808.0
(22) Anmeldetag: 21.08.1991
(51) Int. Cl.: B65G 61/00

(54) **VORRICHTUNG ZUM PALETTIEREN UND/ODER SORTIEREN VON STÜCKGÜTERN**
DEVICE FOR PALLETIZING AND/OR SORTING UNIT LOADS
DISPOSITIF DE PALETTISATION ET/OU DE TRIAGE DE MARCHANDISES DE DETAIL

(30) Priorität: 21.08.1990 DE 4026449
(43) Veröffentlichungstag der Anmeldung: 09.06.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: JORDAN, Günter, D-7000 Stuttgart 80 (DE); VOLZ, Hansjörg, D-7598 Lauf (DE)
(74) Vertreter: Münich, Wilhelm, Dr.
(86) Internationale Anmeldenummer: DE9100661
(87) Internationale Veröffentlichungsnummer: WO9203365

(56) Entgegenhaltungen:
- EP-A- 0 065 029
- FR-A- 2 582 629
- US-A- 4 692 876
- FÖRDERN UND HEBEN, Bd. 40, Nr. 10, Oktober 1990, MAINZ DE Seiten 726 - 727; Günter Jordan: "Chaotisch und automatisch palettieren"

## Beschreibung

### Technisches Gebiet

Die Erfindung bezieht sich auf eine Vorrichtung zum Palettieren und/oder Sortieren von unterschiedlich großen und in beliebiger Reihenfolge sowie beliebigem Mischungsverhältnis vorliegenden Stückgütern auf Transport- und/oder Lagereinheiten gemaß dem Oberbegriff des Patentanspruchs 1.

In einer Vielzahl von Anwendungsfällen, beispielsweise in Versandhäusern, Paket-Verteilstellen von BeförderungsUnternehmen usw. ist es erforderlich, Stückgüter, wie beispielsweise Pakete beliebiger Größe, die in beliebiger Reihenfolge in einem unbekannten Mischungsverhältnis eintreffen, auf Transport- und/oder Lagereinheiten wie beispielsweise Euro-Paletten zu stapeln. Das Stapeln von Stückgütern, die beispielsweise im Falle von Paketen ein Gewicht von bis zu 20 kg und mehr haben können, ist insbesondere dann, wenn ein Stapel mit einer Höhe von mehr als einem Meter gebildet werden soll, wie dies beispielsweise bei sogenannten Standard-Rollbehältern der Fall ist, eine sehr kraftraubende Tätigkeit, die derzeit in den meisten Distributions-und Verteilzentren von Hand ausgeführt wird.

### Stand der Technik

Um diese kraftraubende Tätigkeit automatisieren zu können, ist eine Vorrichtung zum Palettieren von Stückgütern unterschiedlicher Größe gemäß dem Oberbegriff des Patentanspruchs 1 als Prototyp vom Forschungsinstitut der niederländischen Post- und Fernmeldeverwaltung realisiert.

Bei dieser bekannten Vorrichtung wird ein Zwischenspeicher in Form eines in Fächer aufgeteilten und in einer Richtung umlaufenden Bandes verwendet; in jedem Fach dieses Bandes befindet sich ein Paket beliebiger, aber bekannter Größe. Da insbesondere bei auftragsspezifisch und damit individuell kommissionierten Ladeeinheiten die Größe der Pakete in der Regel nicht bekannt ist, ist bei dieser bekannten Vorrichtung ein Kamerasystem vorgesehen, das die Größe eines jeden in ein Fach des Bandes eingestellten Paketes erkennt und die Abmessungen an eine Auswerte-und Steuereinheit, beispielsweise einen handelsüblichen Computer weitergibt. Dieser Computer errechnet aus den in dem Zwischenspeicher befindlichen Paketgrößen eine "möglichst optimale" Stapel-Anordnung. Entsprechend der von dem Computer generierten Stapel-Anordnung werden dann die Pakete von einem auf einem Schienensystem montierten Industrieroboter entnommen und beispielsweise in Standard-Rollbehälter eingelegt.

Diese bekannte Vorrichtung ermöglicht es zwar, das Stapeln von Paketen selbsttätig mit einem Industrieroboter auszuführen, für den praktischen Betrieb hat sie jedoch noch eine Reihe gravierender Nachteile:

Wie einer weiteren Beschreibung dieser Vorrichtung zu entnehmen ist, wird trotz eines sehr großen Puffers nur ein vergleichsweise geringer Füllungsgrad erreicht:

So wurden mit insgesamt palettierten 54 Paketen und einer Puffergröße von 45 Paketen - anders ausgedrückt einer Puffergröße von mehr als 80% des gesamten Kommissionsumfangs - nur ein Füllungsgrad von 44,3% erreicht, wenn die Paketgröpen stark differieren, bzw. ein Füllungsgrad von 69,6%, wenn lediglich 7 verschiedene Paketsorten verwendet wurden.

Die Ursache hierfür dürfte der bei der bekannten Vorrichtung verwendete Palettieralgorithmus sein, der zwar nicht veröffentlicht ist, von dem aber aufgrund von veröffentlichten Simulations-Bildern anzunehmen ist, daß so vorgegangen wird, daß nach Möglichkeit aus gleichen Paketen Türme gebaut werden".

Sieht man von dem vergleichsweise wenig befriedigenden Füllungsgrad einmal ab, so weist die bekannte Vorrichtung gemaß dem Oberbegriff des Patentanspruchs 1 noch folgenden gravierenden Nachteil auf:

Die bekannte Vorrichtung arbeitet mit einem mit starren Fächern versehenen und in einer Richtung umlaufen Band; ferner ist zusätzlich der Industrieroboter auf Schienen verfahrbar. Da das Band nur in einer Richtung umlaufen kann, dauert es insbesondere zu Beginn, d.h. wenn der Puffer vollständig bestückt ist, aber noch kein Entnahmevorgang stattgefunden hat, verhältnismäßig lange, um zum einen das von der Steuer- und Auswerteeinheit vorgesehene Paket in den Arbeitsbereich des Industrieroboters zu bringen, und um andererseits ein freies Fach in den Bereich einer Beladeeinheit zu überführen, die in das freigewordene Fach ein weiteres Stückgut legt.

Ferner wird von der Firma Prolog System GmbH, 6380 Bad Homburg ein Computerprogramm angeboten, mit dem das Beladen sowohl sorten-reiner Stapel als auch Auftrags-bezogener Produkt-Mix-Paletten berechnet werden kann, wobei dann die eigentliche Beladung "von Hand" nach dem berechneten Beladungs- bzw. Stauplan erfolgt.

Dieses bekannte Computerprogramm ermöglicht zwar eine gute Ausnutzung des vorhandenen Stauraumes, nachteilig ist jedoch, daß vor Beginn des Berechnungsvorganges die gesamte Kommission, d.h. die Zahl und die Größe der auf einer Transport- und/oder Lagereinheit zu stapelnder Stückgüter bekannt sein muß. Diese Forderung ist jedoch insbesondere in Paket-Verteilstellen oder in Versandhäusern, in denen Pakete an unterschiedlichen Stellen bearbeitet und dann zu einer zentralen Distributionsstelle weitergeleitet werden, nicht zu erfüllen, sofern nicht große Lagerräume als "Zwischenspeicher" zur Verfügung stehen.

Weiterhin ist ein nachträglicher Zugriff auf die Stückgüter, die gemäß einem Ablegealgorithmus abgestellt worden sind, sehr problematisch, sofern die Zugriffsreihenfolge nicht bereits von vornherein festgelegt worden ist, oder die Möglichkeit eines nachträglichen Unsortierens der Stückgüter besteht; dies nimmt allerdings wiederum mehr Platz in Anspruch.

Eine weitere Palettiervorrichtung, ähnlich der vorstehend beschriebenen, wird in der US-A-4 692 876 dargestellt. Von ihr wird im Oberbegrift der Anspruchs 1 angegangen.

### Beschreibung der Erfindung

Der Erfindung liegt die Aufgabe zugrunde, eine Vorrichtung zum selbsttätigen Palettierern und/oder Sortieren von Stückgütern unterschiedlicher Größe, die in beliebiger, nicht bekannter Reihenfolge sowie in beliebigem, nicht bekanntem Mischungsverhältnis eintreffen, anzugeben, bei der ohne manuelle Stapelvorgänge in möglichst kurzer Zeit eine möglichst gute Befüllung der Transport- und/oder Lagereinheiten erreicht werden kann.

Eine erfindungsgemäße Lösung dieser Aufgabe ist im Kennseichen des Patentanspruch 1 angegeben. Weiterbildungen der Erfindung sind Gegenstand der Unteransprüche.

Die Erfindung geht von dem Grundgedanken aus, daß - um kurze Palettierzeiten zu erreichen - der Zwischenspeicher, der zu palettierende Stückgüter aufnimmt, kurze Be- und Entladezeiten haben muß. Darüberhinaus ist es von Vorteil, wenn der Zwischenspeicher "nicht zu groß" ist, da es gerade in Paket-Verteilzentren oder bei Versandhäusern durchaus lange dauern kann, bis eine größere Anzahl von Paketen eingetroffen ist, die in einer Transporteinheit palettiert werden sollen. Zudem führt die Verwendung eines großen "Puffers" zu einem Mehrbedarf an Raum und höheren Kosten.

Zur Realisierung dieser erfindungsgemäßen Grundüberlegungen wird als Zwischenspeicher ein in zwei Richtungen verfahrbares Förderband gewählt, auf dem die einzelnen Stückgüter nicht in festen Plätzen bzw. Boxen angeordnet sind. Die Grundfläche derart ger Boxen müßte nämlich so gewählt werden, daß in jeder Box auch die größte überhaupt zu stapelnde Stückgüter-Sorte Platz hat. Wenn bei einer zufälligen Kommissionierung aber nur vergleichsweise kleine Stückgüter eintreffen, würde sich bei einer festen Platzeinteilung eine schlechte Ausnutzung des Zwischenspeichers ergeben. Deshalb werden erfindungsgemäß die einzelnen Stückgüter in wenigstens einer Reihe in beliebiger Anordnung auf dem in zwei Richtungen verfahrbaren Förderband angeordnet. Die einzigen Bedingungen, die an die Anordnung zu stellen sind, ist, daß der Abstand zwischen getrennt aufzunehmenden Stückgütern so groß sein muß, daß bei Verwendung eines Backengreifers an der mehrachsigen Handhabungs- und Positioniereinheit die Backen des Greifers das Stückgut greifen können. Bei Verwendung von oben greifenden Sauggreifern entfällt auch diese Forderung. Ferner ist es erforderlich, daß die Auswerte- und Steuereinheit, die beispielsweise ein üblicher Computer mit entsprechender Peripherie sein kann, zusätzlich zur Form und den Abmessungen der einzelnen Stückgüter deren Anordnung auf dem Förderband erfaßt. Anders ausgedrückt, wird erfindungsgemäß ein dynamischer Puffer verwendet, der je nach Größe der Stückgüter ausgelegt wird.

Durch diese Ausbildung ist es möglich, das Förderband bei feststehender Handhabungs- und Positioniereinheit in kurzer Zeit so zu verfahren, daß die Stückgüter an vorgegebenen Stellen im wahlfreien Zugriff vom Förderband entnommen werden können. Darüberhinaus ist es beispielsweise in der Zeitspanne möglich, in der die Handhabungs- und Positioniereinheit, also beispielsweise ein Industrieroboter das entnommene Stückgut auf der Transport- und/oder Lagereinheit positioniert, das Förderband so zu verfahren, daß ein neues Stückgut an einer Beladestelle auf das Förderband überführt werden kann. Vor allem aber ermöglicht die erfindungsgemäße Ausbildung des Zwischenspeichers die Realisierung eines weiteren erfindungsgemäßen Grundgedankens:

Erfindungsgemäß ist nämlich erkannt worden, daß es zur Erzielung eines optimalen Füllungsgrades keinesfalls erforderlich ist, bereits vor Beginn des Palettier- und/oder Sortiervorganges einen Großteil, d.h. cirka 80% der zu palettierenden Stückgüter, wie bei der Vorrichtung des niederländischen Postforschungsinstitutes, oder gar die vollständige Kommission wie bei dem Computerprogramm der Prolog GmbH zu kennen. Tatsächlich ist es ausreichend, wenn mit mit Puffergrößen von maximal 30% der insgesamt zu palettierenden Stückgut-Zahl gearbeitet wird.

Insbesondere ist es dabei gemäß Anspruch 2 bevorzugt, wenn die Anzahl der maximal vom Zwischenspeicher aufnehmbaren Stückgüter so gewählt ist, daß die Summe ihrer Grundflächen kleiner als der dreifache Wert der nutzbaren Grundfläche der Transport- und/oder Lagereinheit ist. Nimmt man einen geringfügig schlechteren Füllgrad in Kauf, so ist es gemäß Anspruch 3 sogar ausreichend, wenn die Summe der Grundflächen der gespeicherten Stückgüter höchstens gleich der nutzbaren Grundfläche der Transport- und Lageeinheit ist; dies bedeutet anders ausgedrückt, daß bei einer in der Regel mit 10 oder mehr Lagen bestückten Palette im Zwischenspeicher weniger Stückgüter vorhanden sind, als für die Befüllung einer einzigen Lage erforderlich ist, und daß dennoch ein guter Füllgrad erreicht wird.

Erfindungsgemäß ist nämlich erkannt worden, daß der Füllgrad bei einer automatischen Bestückung einer Palette wesentlich gesteigert werden kann, wenn anders als bei bekannten Vorrichtungen keine Türme aus gleichartigen Stückgütern gebaut werden, sondern wenn versucht wird, die Stückgüter so anzuordnen, daß sie möglichst große zusammenhängende ebene Flächen bilden.

Deshalb arbeitet gemäß Anspruch 13 die erfindungsgemäße Vorrichtung derart, daß zu Beginn des Palettiervorgangs das im Zwischenspeicher befindliche Stückgut mit der größten Grundfläche oder die Stückgüter gleicher Höhe, die zusammen die größte Grundfläche einnehmen, in einer Ecke der Transport- und/Lagereinheit angeordnet werden.

Beim Stand der Technik würden dagegen gleichartige Stückgüter übereinander zu einem Turm gestapelt. Anschließend werden das Stückgut bzw. die Stückgüter abweichender, jedoch gleicher Höhe, das alleine oder die zusammen die nächstgrößte Grundfläche einnehmen, in der gegenüberliegenden Ecke der Transport- und Lagereinheit angeordnet. Bei der weiteren Befüllung der Transport- und Lagereinheit wird so vorgegangen, daß die Stückgüter so gestapelt werden, daß sich immer möglichst große zusammenhängende ebene horizontale Flächen ergeben (Anspruch 13).

Die mit der erfindungsgemäßen Vorrichtung erzielbaren kurzen Taktzeiten können durch die in den Ansprüchen 4 und 5 angegebenen Maßnahmen weiter verringert werden:

Gemäß Anspruch 4 ist zu jedem Zeitpunkt mehr als ein Speicherplatz auf dem Förderband frei, so daß das Förderband zum Beladen nur über kurze Strecken verfahren werden muß, während im Anspruch 5 gekennzeichnet ist, daß ein durch Entnahme eines Stückgutes frei werdender Speicherplatz ohne Verfahren des Förderbandes wieder befüllbar ist.

In jedem Falle ist es jedoch von Vorteil, wenn gemäß Anspruch 6 eine Beladeeinheit vorgesehen ist, die die Stückgüter auf das Förderband lädt, da hierdurch eine vollständige Automatisierung und somit eine selbsttätig arbeitende Palettier-Zelle realisiert wird. Diese Beladeeinheit, die gemaß Anspruch 7 die Stückgüter auf einen von der Auswerte- und Steuereinheit vorgegebenen Platz laden kann, von dem beispielsweise die weitere Verarbeitung besonders schnell erfolgen kann, kann insbesondere einen Schieber (Anspruch 8) aufweisen, der ein von einer Zuführeinheit, beispielsweise einem weiteren Förderband zugeführtes Stückgut auf das als Zwischenspeicher dienendes Förderband schiebt. Ein derartiger Schieber kann insbesondere "parallel" zum Handhabungsgerät arbeiten, so daß sowohl der Zeitaufwand als auch die Verfahrwege minimiert werden.

Das Erkennungssystem, das die Abmessungen der dem Zwischenspeicher zugeführten Stückgüter erfaßt, kann beispielsweise eine Videokamera oder einen in an sich bekannter Weise aufgebauten Lichtschrankensensor aufweisen, die über eine nachgeschaltete Bildverarbeitungseinrichtung die Abmessungen der ankommenden Stückgüter erfassen.

Ferner ist es - insbesondere beim Palettieren von Paketen mit einer Normgröße, wie dies beispielsweise in Versandzentralen der Fall ist, möglich, an dem jeweiligen Stückgut einen Identifizierungscode, also beispielsweise einen Barcode anzubringen, den eine Leseeinrichtung, also beispielsweise ein bekannter Barcode-Leser liest. Natürlich können auch andere Identifizierungssysteme, wie beispielsweise auf Ultraschall-, Infrarot-Basis arbeitende Systeme oder Schieber mit integriertem Meßsystem verwendet werden.

Letztlich ist es bei computergesteuerten Versandsystemen auch möglich, von einem Leitrechner, der das Befüllen der Stückgüter steuert, Daten über die Größe der einzelnen Stückgüter, also beispielsweise der einzelnen Pakete an das Erkennungssystem weiterzugeben (Ansprüche 9 bis 11).

In Fällen, in denen eine Reihe von Transport- und/oder Lagereinheiten mit Stückgütern befüllt werden müssen, die in großem zeitlichen Abstand ankommen, ist es selbstverständlich möglich, die Positionier- und Handhabungseinrichtung, also beispielsweise einen Industrieroboter, für eine Reihe von Zwischenspeichern einzusetzen, um Totzeiten zu vermeiden, die beispielsweise dadurch entstehen würden, daß die erfindungsgemäße Vorrichtung auf eine ausreichende Befüllung des Zwischenspeichers "warten" muß. Hierzu ist es beispielsweise möglich, den Industrieroboter in an sich bekannter Weise auf ein Schienensystem zu setzen.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: schematisch eine erfindungsgemäße Vorrichtung,
- Fig. 2a: bis c ein erfindungsgemäß als Zwischenspeicher verwendetes Förderband in drei Stellungen,
- Fig. 3a: bis c ein weiteres Ausführungsbeispiel eines erfindungsgemäß als Zwischenspeicher verwendeten Förderbandes in drei Stellungen, und
- Fig. 4a: bis d mit einer erfindungsgemäßen Vorrichtung bestückte Paletten.

### Beschreibung von Ausführungsbeispielen

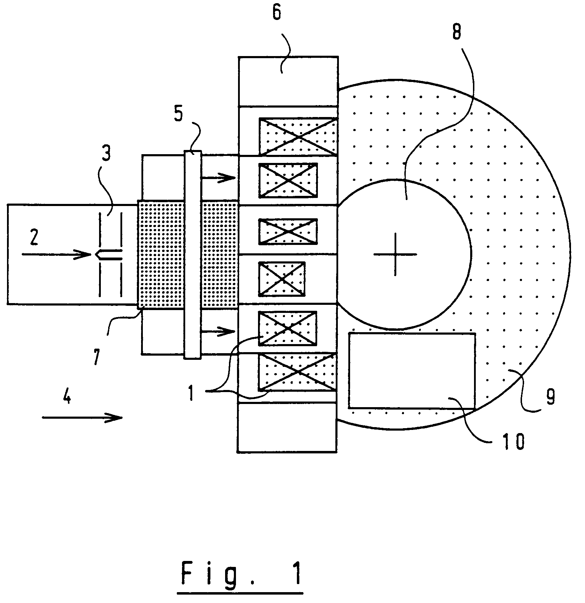

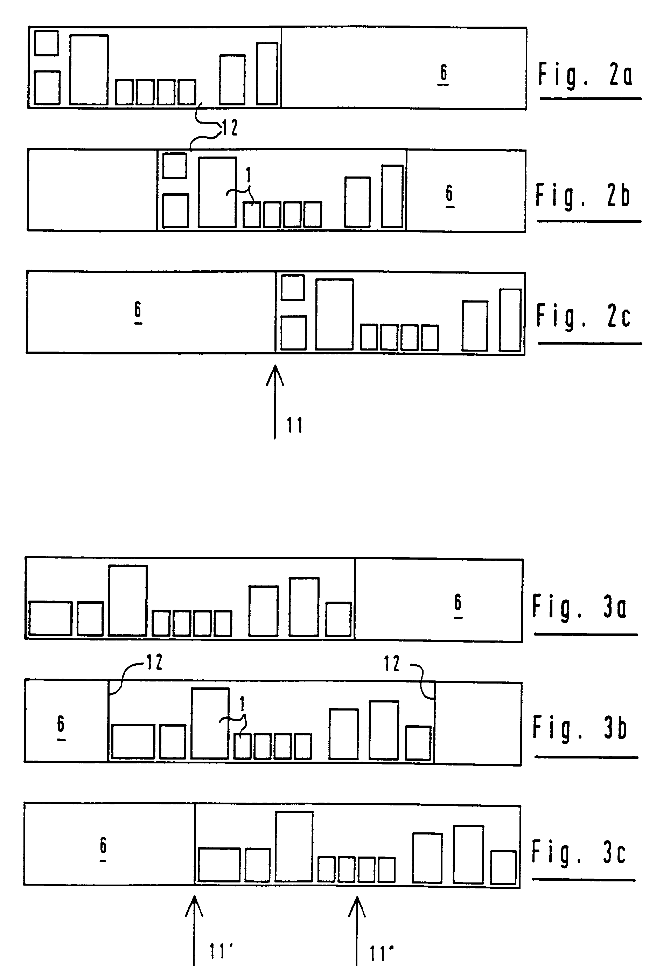

Fig. 1 zeigt schematisch ein Ausführungsbeispiel einer erfindungsgemäßen Vorrichtung zum Palettieren und/oder Sortieren von unterschiedlich großen Stückgütern 1, die in beliebiger Reihenfolge sowie in beliebigem Mischungsverhältnis von einer Zuführeinheit, beispielsweise einem Bandförderer 2 mit einer Vereinzelungseinrichtung 3 in Richtung eines Pfeils 4 angeliefert werden. Von dem Bandförderer 2 werden die Stückgüter 1 durch einen Schieber 5 in einen Zwischenspeicher 6 überführt, in dem die zu palettierenden Stückgüter zwischengespeichert werden. Der Zwischenspeicher 6 ist ein in zwei Richtungen verfahrbares Förderband, auf dem die einzelnen Stückgüter 1 in wenigstens einer Reihe in beliebiger Anordnung ohne feste Platzzuteilung angeordnet sind (vgl. hierzu auch die Fig. 2 und 3),

Ferner ist ein Erkennungssystem 7 vorgesehen, das die Form und die Abmessungen der einzelnen Stückgüter erfaßt, und das beispielsweise ein entsprechendes Lichtschrankensystem oder eine Videokamera aufweisen kann.

Eine mehrachsige Handhabungs- und Positioniereinheit 8, die nur schematisch mit ihrem Arbeitsraum 9 dargestellt ist, und die beispielsweise ein handelsüblicher Industrieroboter sein kann, ergreift die in dem Zwischenspeicher 6 gespeicherten Stückgüter 1 und setzt diese an einem von einer nicht näher dargestellten Auswerte- und Steuereinheit vorgegebenen Ort auf einer Transport- und/oder Lagereinheit 10 ab, die beispielsweise eine Europalette sein kann, und die im Arbeitsraum 9 des Industrieroboters 8 angeordnet ist.

Die Fig. 2a bis 2c zeigen ein erstes Ausführungsbeispiel eines Zwischenspeichers 6. Bei diesem Ausführungsbeispiel ist der Zwischenspeicher als ein in zwei Richtungen verfahrbares Förderband mit einer Entnahmestelle 11 für die Stückgüter 1 ausgebildet. Ferner ist der nutzbare Pufferbereich 12 auf dem Band dargestellt. In Teilfigur a ist das Band in der Endstellung links, in Teilfigur b in Mittelstellung und in Teilfigur c in Endstellung rechts dargestellt.

Die Fig. 3a bis 3c zeigen ein zweites Ausführungsbeispiel eines Zwischenspeichers 6. Bei diesem Ausführungsbeispiel ist der Zwischenspeicher wiederum als ein in zwei Richtungen verfahrbares Förderband ausgebildet. Im Gegensatz zu dem ersten Ausführungsbeispiel sind jedoch zwei Entnahmestellem 11′ und 11˝ für die Stückgüter 1 vorgesehen. Damit ist das Band beispielsweise als gemeinsamer Zwischenspeicher für zwei Palettiervorrichtungen mit je einem Industrieroboter oder als Zwischenspeicher für eine zur Geschwindigkeitserhöhung mit zwei Industrierobotern arbeitende Palettiervorrichtung verwendbar. In Teilfigur a ist wiederum das Band in der Endstellung links, in Teilfigur b in Mittelstellung und in Teilfigur c in Endstellung rechts dargestellt.

Beiden Ausführungsbeispielen ist gemeinsam, daß die Stückgüter 1 nicht an fest vorgegebenen Stellen auf dem Förderband 6 abgelegt werden, sondern an beliebigen Stellen. Die Auswerte- und Steuereinheit erfaßt zusätzlich den genauen Ort der Stückgüter auf dem Förderband, und verfährt das Förderband derart, daß die Stückgüter an vorgegebenen Stellen im wahlfreien Zugriff vom Förderband entnommen werden.

Die Fig. 4a bis d zeigen mit einer erfindungsgemäßen Vorrichtung bestückte Paletten.

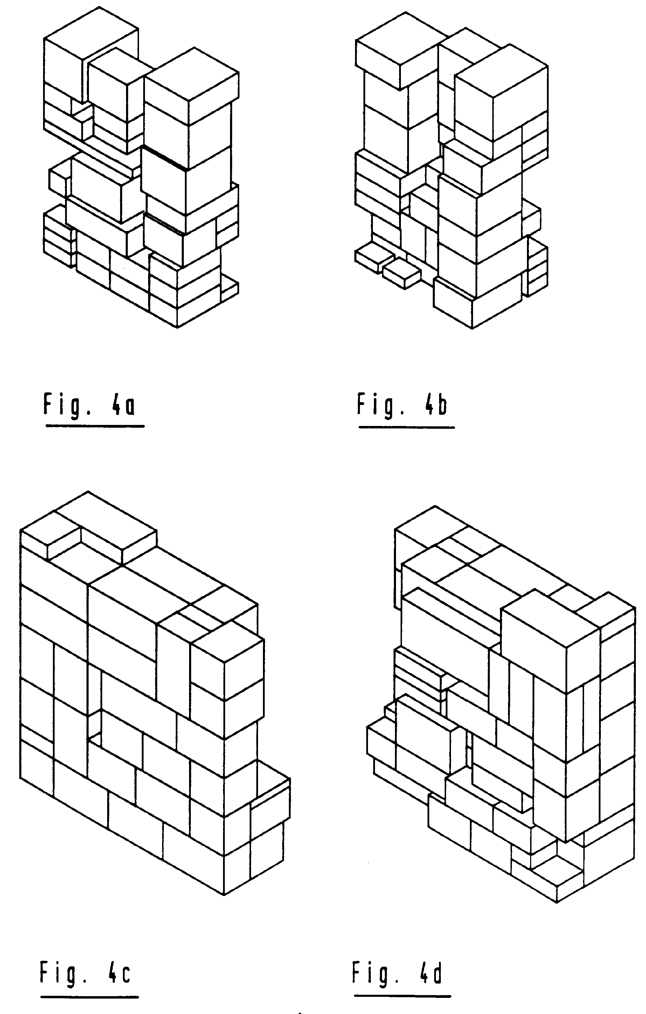

Die Fig. 4a und 4b zeigen eine bestückte Palette in Vorderansicht und Rückansicht, die mit 23 Paketsorten, deren Größe nicht nach DIN abgestuft, sondern willkürlich gewählt ist, und mit einer Puffergröße von 6 Paketen bestückt worden ist. Der erreichte Füllgrad beträgt 56%.

Die Fig. 4c und 4d zeigen eine bestückte Palette in Vorderansicht und Rückansicht, die mit 7 Paketsorten und mit einer Puffergröße von 6 Paketen bestückt worden ist. Der erreichte Füllgrad beträgt 78%.

Bei der Bestückung beider Paletten ist jeweils so vorgegangen worden, daß zu Beginn des Palettiervorgangs die Auswerte- und Steuereinheit das im Zwischenspeicher befindliche Stückgut mit der größten Grundfläche oder die Stückgüter gleicher Höhe, die zusammen die größte Grundfläche einnehmen, in einer Ecke der Transport- und Lagereinheit anordnet. Anschließend ordnet die Auswerte- und Steuereinheit das Stückgut bzw. die Stückgüter abweichender jedoch gleicher Höhe, das alleine bzw. die zusammen die nachstgrößte Grundfläche einnehmen, in der gegenüberliegenden Ecke der Transport- und Lagereinheit an. Die folgenden Stückgüter stapelt die Auswerte- und Steuereinheit derart auf der Grundfläche der Transport- und Lagereinheit sowie auf der Oberfläche bereits palettierter Stückgüter, daß sich zusammenhängende Oberflächen unter weitgehender Vermeidung isolierter "Türme" ergeben.

## Patentansprüche

1. Vorrichtung zum Palettieren und/oder Sortieren von unterschiedlich großen Stückgütern (1), die in beliebiger Reihenfolge sowie in beliebigem Mischungsverhältnis vorliegen, auf Transport- und/oder Lagereinheiten (10), mit einem als Förderband (6) ausgebildeten Zwischenspeicher, in dem die zu palettierenden Stückgüter (1) zwischengespeichert werden,
einem Vordem Zwischenspeicher befindlichen Erkennungssystem (7), das die Form und die Abmessungen der einzelnen Stückgüter (1) erfaßt, einer Auswerte- und Steuereinheit die den Ort der Stückgüter (1) auf dem Förderband (2) des Zwischenspeichers erfaßt, und dieses derart verfährt, daß die Stückgüter (1) an vorgegebenen Stellen im wahlfreien Zugriff vom Förderband (2) entnommen werden Können und einer mehrachsigen Handhabungs- und Positioniereinheit (8), die die in dem Zwischenspeicher (6) gespeicherten Stückgüter (1) ergreift und an einem Ort auf der Transport- und Lagereinheit (10) absetzt,
dadurch **gekennzeichnet,** daß der Zwischenspeicher (6) ein in zwei Richtungen verfahrbares Förderband (2) ist, auf dem die einzelnen Stückgüter (1) in wenigstens einer Reihe in beliebiger Anordnung angeordnet sind,

2. Vorrichtung nach Anspruch 1,
dadurch **gekennzeichnet,** daß die nutzbare Fläche des Zwischenspeichers (6) kleiner als das Dreifache der nutzbaren Grundfläche der Transport-/Lagereinheit (10) ist.

3. Vorrichtung nach Anspruch 1 oder 2,
dadurch **gekennzeichnet,** daß die nutzbare Grundfläche der Transport- und/oder Lagereinheit (10) mindestens halb so groß ist wie die Summe der Grundflächen der im zeitlichen Mittel auf dem Förderband gespeicherten Stückgüter (1).

4. Vorrichtung nach einem der Ansprüche 1 bis 3,
dadurch **gekennzeichnet,** daß zu jedem Zeitpunkt mehr als ein Speicherplatz auf dem Förderband (2) frei ist.

5. Vorrichtung nach einem der Ansprüche 1 bis 3,
dadurch **gekennzeichnet,** daß eine Beladeeinheit vorgesehen ist, die das Band nach Entnahme eines Stückgutes an einem frei gewordenen Speicherplatz ohne Verfahren des Bandes wieder befüllt.

6. Vorrichtung nach einem der Ansprüche 1 bis 5,
dadurch **gekennzeichnet,** daß eine Beladeeinheit vorgesehen ist, die Stückgüter auf das Förderband lädt.

7. Vorrichtung nach Anspruch 6,
dadurch **gekennzeichnet,** daß die Beladeeinheit die Stückgüter (1) auf einen von der Auswerte- und Steuereinheit vorgegebenen Platz lädt, den diese aufgrund der zuvor erfaßten Größe und Abmessungen des jeweiligen Stückgutes (1) bestimmt.

8. Vorrichtung nach Anspruch 6 oder 7,
dadurch **gekennzeichnet,** daß die Beladeeinheit einen Schieber (5) aufweist, der ein von einer Zuführeinheit zugeführtes Stückgut (1) auf das Förderband (2) schiebt.

9. Vorrichtung nach einem der Ansprüche 1 bis 8,
dadurch **gekennzeichnet,** daß das Erkennungssystem (7) wenigstens eine Videokamera oder einen Lichtschranken-Sensor aufweist, deren Ausgangssignal an eine Bildverarbeitungseinrichtung angelegt ist.

10. Vorrichtung nach einem der Ansprüche 1 bis 8,
dadurch **gekennzeichnet,** daß das Erkennungssystem (7) eine Leseeinrichtung aufweist, die zum Erkennen der Abmessungen einen Identifizierungscode an dem jeweiligen Stückgut (1) liest.

11. Vorrichtung nach einem der Ansprüche 1 bis 8,
dadurch **gekennzeichnet,** daß das Erkennungssystem (7) Daten über die Größe der dem Zwischenspeicher (6) zugeführten Stückgüter (1) von einem Leitrechner erhält.

12. Vorrichtung nach einem der Ansprüche 1 bis 11,
dadurch **gekennzeichnet,** daß eine verfahrbare Positionierund Handhabungseinrichtung (8) für mehrere Zwischenspeicher (6) vorgesehen ist.

13. Vorrichtung nach einem der Ansprüche 1 bis 12,
dadurch **gekennzeichnet,** daß die Auswerte- und Steuereinheit zu Beginn des Palettiervorgangs das im Zwischenspeicher (6) befindliche Stückgut (1) mit der größten Grundfläche oder die Stückgüter gleicher Höhe, die zusammen die größte Grundfläche einnehmen, in einer Ecke der Transport- und Lagereinheit (10) und anschließend das Stückgut bzw. die Stückgüter (1) abweichender, jedoch gleicher Höhe, das alleine bzw. die zusammen die nächstgrößte Grundfläche einnehmen, in der gegenüberliegenden Ecke der Transport- und Lagereinheit (10) anordnet.

14. Vorrichtung nach Anspruch 13,
dadurch **gekennzeichnet,** daß die Auswerte- und Steuereinheit die folgenden Stückgüter derart auf der Grundfläche der Transport- und Lagereinheit (10) sowie auf der Oberfläche bereits palettierter Stückgüter stapelt, daß sich zusammenhängende Oberflächen ergeben.

## Claims

1. Device for palletizing and/or sorting unit loads (1) of different sizes, which are present in an optional succession and an optional mixing ratio, on conveying and/or storing units (10), comprising a buffer storage means in the form of a conveyor where said unit loads (1) to be palletized are buffered,
an identification system (7) disposed ahead of said buffer storage means for recognizing the shape and the dimensions of said individual unit loads (1); an evaluating controller for detecting the location of said unit loads (1) on said conveyor (2) of said buffer storage means, with displacement of the latter in a way that said unit loads (1) may be withdrawn at predetermined lo cations from said conveyor (2) at random access, and an multi-axis positioning manipulator (8) which seizes said unit loads (1) stored in said buffer storage means (6) and places them at one location on said conveying and storing unit (10), **characterized** in that said buffer storage means (6) is a belt conveyor (2) movable in two directions, on which are disposed said individual unit loads (1) in at least one row in any succession.

2. Device according to Claim 1,
**characterized** in that the utilizable surface of said buffer storage means (6) is smaller than the tripled utilizable base of said conveying and storing unit (10).

3. Device 1a Claim 1 or 2,
**characterized** in that said utilizable base of said conveying and storing unit (10) corresponds at least to half the sum of the bases of said stored unit loads (1), averaged as a function of time, on said conveyor.

4. Device according to any of Claims 1 to 3,
**characterized** in that more than only one storage location at a time is vacant on said conveyor (2).

5. Device according to any of Claims 1 to 3,
**characterized** in that a loading means is provided which, following the withdrawal of a unit load, recharges said conveyor at a storage location having become vacant, without displacement of said belt.

6. Device according to any of Claims 1 to 5,
**characterized** in that a loading means is provided which places said unit loads on said conveyor.

7. Device according to Claim 6,
**characterized** in that said charging means places said unit loads (1) at a location which is predetermined, on the basis of the previously detected size and dimensions of the respective unit load (1), by said evaluating controller.

8. Device according to Claim 6 or 7,
**characterized** in that said loading means comprises a slide (5) which pushes a unit load (1) fed by a feeding mechanism, on said conveyor (2).

9. Device according to any of Claims 1 to 8,
**characterized** in that said identification system (7) comprises at least one video camera or a light barrier sensor whose output signal is applied to an image-processing system.

10. Device according to any of Claims 1 to 8,
**characterized** in that said identification system (7) comprises a reading means for reading an identifier code on the respective unit load (1) for recognizing the latter's dimensions.

11. Device according to any of Claims 1 to 8,
**characterized** in that said identification system (7) receives from a host computer the data relating to the size of said unit loads (1) fed to said buffer storage means (6).

12. Device according to any of Claims 1 to 11,
**characterized** in that one displaceable positioning manipulator (8) is provided for a plurality of said buffer storage means (6).

13. Device according to any of Claims 1 to 12,
**characterized** in that, at the outset of the palletizing operation, said evaluating controller places that unit load (1) then in said buffer storage means (6), which presents the largest base, or unit loads presenting the same height, which altogether cover the largest base, in a corner of said conveying and storing unit (10), and subsequently arranges those unit load(s) (1) of different size but same height, which, alone or altogether, cover the next larger base, in the opposite corner of said conveying and storing unit (10).

14. Device according to Claim 13,
**characterized** in that said evaluating controller stacks the following unit loads on the base of said conveying and storing unit (10) as well as on the upper surface of the unit loads already palletized, so as to achieve continuous surfaces.

## Revendications

1. Dispositif de palettisation et/ou de triage de marchandises de détail (1) à tailles différentes, qui sont présentes par ordre quelconque ainsi qu'à un rapport des éléments quelconque, sur des unités transporteuses et/ou de stockage (10), comprenant un réservoir tampon sous forme d'un convoyeur à bande (6) à accumuler temporairement lesdites marchandises de détail (1) à palettiser,
un système d'identification (7) disposé en amont dudit réservoir tampon, qui reconnaît la forme et les dimensions desdites marchandises de détail isolées (1), un organe d'évaluation et de commande, qui détecte le lieu desdites marchandises de détail (1) sur ledit convoyeur à bande (2) dudit réservoir tampon, en déplaçant le dernier de façon qu'on puisse enlever lesdites marchandises de détail (1) dudit convoyeur à bande (2) aux endroits déterminés à accès aléatoire,
et un organe manipulateur de positionnement (8) à axes multiples, qui saisit les marchandises de détail (1) stockées dans ledit réservoir tampon (6) et les dépose à un endroit sur ladite unité transporteuse et de stockage (10),
**caractérisé** en ce que ledit réservoir tampon (6) est un convoyeur à bande (2) déplaçable en deux sens, sur lequel sont disposées lesdites marchandises de détail individuelles (1) dans au moins une rangée dans une suite quelconque.

2. Dispositif selon la revendication 1,
**caractérisé** en ce que la surface utile dudit réservoir tampon (6) est plus petite que le triple de la surface de base utile de ladite unité transporteuse et de stockage (10).

3. Dispositif 1a revendication 1 ou 2,
**caractérisé** en ce que la surface de base utile de ladite unité transporteuse et de stockage (10) correspond au moins à la moitié de la somme des surfaces de base desdites marchandises de détail (1) stockées, en moyenne temporaire, sur ledit convoyeur à bande.

4. Dispositif selon une quelconque des revendications 1 à 3,
**caractérisé** en ce qu'à chaque moment plus qu'un seul emplacement de stockage est vacant sur ledit convoyeur à bande (2).

5. Disposisif selon une quelconque des revendications 1 à 3,
**caractérisé** en ce qu'un chargeur est prévu qui remplit de nouveau ledit convoyeur à bande, à un emplacement de stockage, qui est devenu vacant, après la reprise d'une marchandise de détail, sans déplacement de ladite bande.

6. Dispositif selon une quelconque des revendications 1 à 5,
**caractérisé** en ce qu'un chargeur est prévu qui met lesdites marchandises de détail sur ledit convoyeur à bande.

7. Dispositif selon la revendication 6,
**caractérisé** en ce que ledit chargeur met lesdites marchandises de détail (1) à un emplacement déterminé par ledit organe d'évaluation et de commande sur la base de la taille et des dimensions, détectées auparavant, de la marchandise de détail respective (1).

8. Dispositif selon la revendication 6 ou 7,
**caractérisé** en ce que ledit chargeur comprend une coulisse (5) qui pousse une marchandise de détail (1), amenée par un mécanisme d'alimentation, sur ledit convoyeur à bande (2).

9. Dispositif selon une quelconque des revendications 1 à 8,
**caractérisé** en ce que ledit système d'identification (7) comprend au moins un appareil photographique vidéo ou un détecteur de barrage photoélectrique, dont le signal de sortie est appliqué à un système de traitement d'images.

10. Dispositif selon une quelconque des revendications 1 à 8,
**caractérisé** en ce que ledit système d'identification (7) comprend un dispositif de lecture qui lit un code d'identification sur ladite marchandise de détail respective (1) pour la reconnaissance de ses dimensions.

11. Dispositif selon une quelconque des revendications 1 à 8,
**caractérisé** en ce que ledit système d'identification (7) reçoit, d'un ordinateur pilote, des données sur la taille des marchandi- ses de détail (1) amenées audit réservoir tampon (6).

12. Dispositif selon une quelconque des revendications 1 à 11,
**caractérisé** en ce qu'un organe manipulateur de positionnement déplaçable (8) est prévu pour une pluralité desdits réservoirs tampons (6).

13. Dispositif selon une quelconque des revendications 1 à 12,
**caractérisé** en ce que ledit organe d'évaluation et de commande dispose, au début de l'opération de palettisation, la marchandise de détail (1) actuellement dans ledit réservoir tampon (6), qui présente la surface de base la plus grande, ou des marchandises de détail à la même hauteur, qui couvrent ensemble la surface de base la plus grande, dans un coin de ladite unité transporteuse et de stockage (10), et dispose ensuite la ou respectivement les marchandise(s) de détail à taille différente, cependant à la même hauteur, qui, seule(s) ou ensemble, couvrent la surface de base immédiatement supérieure, dans le coin opposé de ladite unité transporteuse et de stockage (10).

14. Dispositif selon la revendication 13,
**caractérisé** en ce que ledit organe d'évaluation et de commande empile les marchandises de détail suivantes sur la surface de base de ladite unité transporteuse et de stockage (10) ainsi que sur la face supérieure des marchandises de détail déjà palettisées, de façon à achever des surfaces en continu.
